# EUROPÄISCHE PATENTSCHRIFT

(11) **EP 0 972 703 B1**
(45) Veröffentlichungstag und Bekanntmachung des Hinweises auf die Patenterteilung: **01.12.2004**
(21) Anmeldenummer: 99110652.7
(22) Anmeldetag: 10.07.1999
(51) Int. Cl.: B62K 19/36

(54) **Einstelleinrichtung für ein Federbein eines Motorrads**
Adjustment device for a suspension strut of a motor cycle
Dispositif de réglage de bras de suspension d'une motocyclette

(30) Priorität: 17.07.1998 DE 19832324
(43) Veröffentlichungstag der Anmeldung: 19.01.2000
(73) Patentinhaber: Bayerische Motoren Werke Aktiengesellschaft, 80788 München (DE)
(72) Erfinder: Berkmann, Franz, 80935 München (DE)

(56) Entgegenhaltungen:
- EP-A- 0 814 015
- US-A- 4 815 758
- US-A- 5 181 696

## Beschreibung

Die Erfindung betrifft eine Einstelleinrichtung für ein Federbein eines Motorrads nach dem Oberbegriff des Hauptanspruchs.

Es ist bereits bekannt, Federbeine von Motorrädern einzustellen. So kann gewöhnlich die Federbasis durch ein Handrad verstellt werden, welches hydraulisch mit dem Federbein verbunden ist. Außerdem ist bekannt, die Dämpfungscharakteristik des Federbeins durch Einstellung von dessen Zugstufe zu verändern. Diese Einstellung wird direkt am Federbein vorgenommen.

Ein Handrad läßt sich im allgemeinen nicht so positionieren, daß es sich in das Fahrzeugdesign unauffällig einfügt und gleichzeitig seine Verstellung aus ergonomischer Sicht mühelos möglich ist. Außen am Motorrad stört das Handrad in der Regel die Außenhautkontur, während unter der Sitzbank angebracht, der dort zur Verfügung stehende Raum gewöhnlich zu klein ist, um das Handrad zu seiner Verstellung ergonomisch gut umfassen zu können.

Die DE 36 03 955 C2 beschreibt einen Dämpfkrafteinstellmechanismus für einen hydraulischen Dämpfer, bei dem die Einstellung über einen Elektromotor vorgenommen wird. Eine solche Lösung ist beim Motorrad zu aufwendig und nachteilig in Bezug auf das höhere Gewicht.

Aufgabe der Erfindung ist es, eine Einstelleinrichtung für ein Federbein eines Motorrads bereitzustellen, die ergonomisch günstig zu bedienen ist und sich in das Fahrzeugdesign einfügt, ohne auffällig zu wirken.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist ein Motorrad, mit mindestens einem Federbein, mit mindestens einem manuell betätigbaren Einstellmittel zum Verändern von Federvorspannung und/oder von Dämpfungseigenschaften des Federbeins, wobei das Einstellmittel vom Federbein getrennt am Motorrad angebracht ist, dadurch gekennzeichnet, daß mindestens ein Betätigungsorgan des Einstellmittels in zwei verschiedene Positionen zum Motorrad bringbar ist, eine Verstellposition zum manuellen Verstellen des Einstellmittels und eine Unterbringungsposition, in der das Einstellmittel so angeordnet ist, daß es nicht über eine in seiner Umgebung befindliche Kontur des Motorrads hinausragt.

Das hat den Vorteil, daß das manuell betätigbare Einstellmittel am Motorrad sowohl eine ergonomisch günstige Position zum Verstellen einnehmen kann, als auch eine Position, in der es sich unauffällig in das Fahrzeugdesign einfügt.

In weiteren bevorzugten Ausführungen der Erfindung ist vorgesehen, daß das Einstellmittel mit dem Betätigungsorgan oder das Betätigungsorgan des Einstellmittels so am Motorrad angebracht ist, daß es durch eine translatorische Bewegung oder durch eine Schwenkbewegung, insbesondere gegen die Kraft einer Totpunktfeder, von der Unterbringungsposition in die Verstellposition gebracht werden kann.

Durch eine der vorbeschriebenen Anbringungsweisen am Motorrad wird vorteilhafterweise ein einfacher Aufbau der Erfindung erreicht.

Wenn das Einstellmittel mit dem Betätigungsorgan oder das Betätigungsorgan des Einstellmittels über ein Gelenkgetriebe am Motorrad angebracht ist, ist es möglich den Weg des Betätigungsorgans von der Unterbringungsposition in die Verstellposition den Gegebenheiten am Motorrad bezüglich freier Unterbringungsmöglichkeiten für das Einstellmittel besser anzupassen.

Wird die Verstellung des Federbeins hydraulisch bewirkt, so ist ein Geberzylinder notwendig und das Federbein ist dann vorteilhafterweise mit dem Einstellmittel über eine Hydraulikleitung verbunden. Während bei mechanischer Verstellung des Federbeins dieses mit dem Einstellmittel über eine drehbare mechanische Verbindung verbunden ist.

Bei einer besonders bevorzugten Ausführungsform der Erfindung wird mit dem Einstellmittel die Federvorspannung über die Verstellung einer Federbasis verändert und/oder die Dämpfungseigenschaften über die Verstellung einer Zugstufe des Federbeins. Dabei ist von Vorteil, daß das Einstellmittel mit dem Betätigungsorgan oder das Betätigungsorgan des Einstellmittels so am Motorrad angebracht werden kann, daß es vom Fahrer während der Fahrt verstellbar ist.

Wenn das Einstellmittel mit dem Betätigungsorgan oder das Betätigungsorgan des Einstellmittels unter der Sitzbank des Motorrads angebracht ist, so ist es zu seiner Bedienung besonders vorteilhaft, wenn die Sitzbank klappbar am Motorrad angebracht ist und durch eine Gasdruckfeder in geöffneter Stellung gehalten wird.

Ein bevorzugtes Ausführungsbeispiel der Erfindung ist in der nachfolgenden Beschreibung und der zugehörigen Zeichnung näher dargestellt. Es zeigen
- Figur 1: eine hochgeklappte Motorradsitzbank mit darunter befindlicher Einstelleinrichtung für ein Federbein eines Motorrads in Verstellposition,
- Figur 2: die Einstelleinrichtung in Unterbringungsposition und
- Figur 3: eine weitere Einstelleinrichtung in Unterbringungsposition und in Versteilposition (gestrichelt gezeichnet).

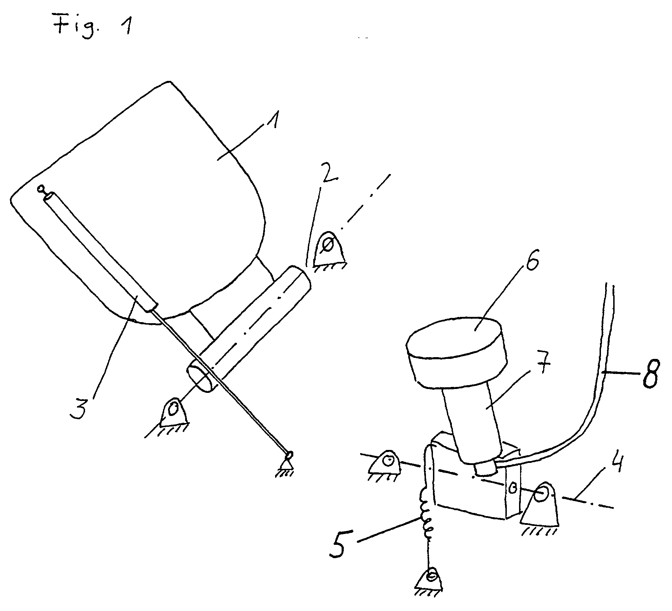

Nach Figur 1 ist eine erfindungsgemäße Einstelleinrichtung für ein Federbein eines Motorrads unter einer Motorradsitzbank 1 angebracht. Die Motorradsitzbank 1 ist über ein Scharnier 2 hochklappbar am Motorrad befestigt. Eine Gasdruckfeder 3 hält die Motorradsitzbank 1 in hochgeklappter Position und erleichtert den Hochklappvorgang.

Unter der Motorradsitzbank 1 ist um eine Achse 4 gegen die Kraft einer Totpunktfeder 5 schwenkbar ein Einstellmittel mit einem Betätigungsorgan zum Verändern von Dämpfungseigenschaften eines nicht gezeichneten Federbeins angebracht. Das Betätigungsorgan ist als Handrad 6 ausgebildet, durch dessen Drehung das Einstellmittel, ein Geberzylinder 7, beaufschlagt wird, wodurch eine Federbasisverstellung am nicht gezeichneten Federbein erreicht wird. Dazu ist der Geberzylinder 7 über eine Hydraulikleitung 8 mit dem Federbein verbunden.

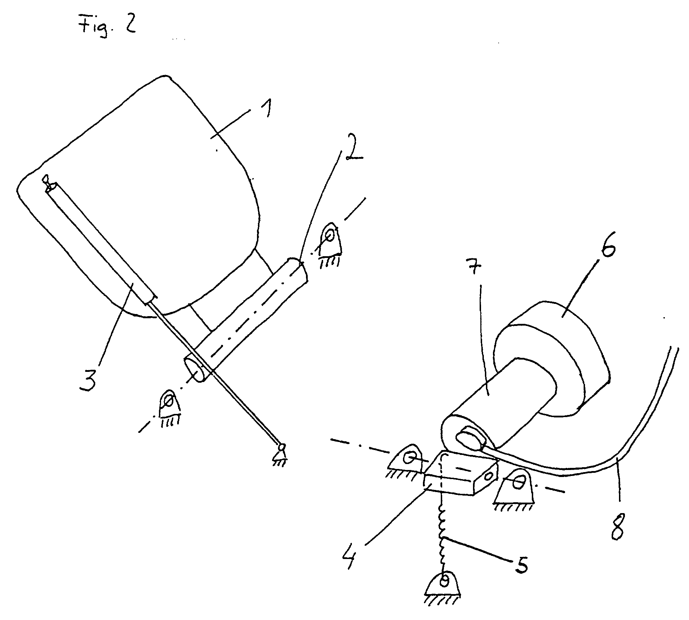

Der Geberzylinder 7 befindet sich in einer seiner zwei Endpositionen, der Verstellposition, in der das Handrad 6 ergonomisch günstig umgriffen werden kann. In dieser Position des Geberzylinders 7 könnte die Motorradsitzbank 1 nicht in ihre geschlossene Stellung zurückgeklappt werden. Dazu muß der Geberzylinder 7 zuerst um die Achse 4 in seine andere Endposition geschwenkt werden, die Unterbringungsposition. Diese zeigt Figur 2. Durch die Totpunktfeder 5 werden Geberzylinder 7 mit Handrad 6 in ihren beiden Positionen, der Unterbringungsposition und der Verstellposition, fixiert.

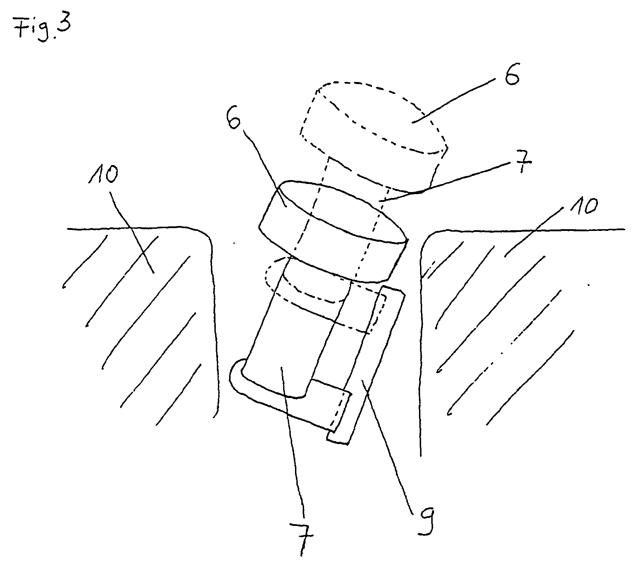

Figur 3 zeigt eine translatorisch verstellbare Einstelleinrichtung aus Handrad 6 und Geberzylinder 7. Die Einstelleinrichtung ist auf einer motorradfesten Schiene 9 befestigt und translatorisch zwischen der Unterbringungsposition und der Verstellposition (gestrichelt gezeichnet) hin und her bewegbar. In der Unterbringungsposition fügt sich die Einstelleinrichtung optisch und aerodynamisch vorteilhaft in die Außenkontur der Verkleidung 10 des Motorrads ein. Während sie in der Verstellposition ergonomisch ideal bedienbar aus der Außenkontur der Verkleidung 10 des Motorrads herausragt.

Die Erfindung ist nicht auf die beschriebenen Ausführungsbeipiele beschränkt. Insbesondere kann die Kraftübertragung von dem Betätigungsorgan oder der Einstelleinrichtung aus auch mechanisch mit dem Fachmann geläufigen Übertragungsmitteln erfolgen. Außerdem ist auch eine so aufgebaute Zugstufenverstellung für das Federbein denkbar und das Betätigungsorgan kann so am Motorrad angebracht sein, daß es vom Fahrer während der Fahrt verstellt werden kann.

## Patentansprüche

1. Motorrad, mit mindestens einem Federbein, mit mindestens einem manuell betätigbaren Einstellmittel zum Verändern von Federvorspannung und/oder von Dämpfungseigenschaften des Federbeins, wobei das Einstellmittel vom Federbein getrennt am Motorrad angebracht ist, **dadurch gekennzeichnet, daß** mindestens ein Betätigungsorgan (6) des Einstellmittels (7) in zwei verschiedene Positionen zum Motorrad bringbar ist, eine Verstellposition zum manuellen Verstellen des Einstellmittels (7) und eine Unterbringungsposition, in der das Einstellmittel (7) so angeordnet ist, daß es nicht über eine in seiner Umgebung befindliche Außenkontur des Motorrads hinausragt.

2. Motorrad nach Anspruch 1, **dadurch gekennzeichnet, daß** das Einstellmittel (7) mit dem Betätigungsorgan (6) oder das Betätigungsorgan (6) des Einstellmittels so (7) am Motorrad angebracht ist, daß es durch eine translatorische Bewegung von der Unterbringungsposition in die Verstellposition gebracht werden kann.

3. Motorrad nach Anspruch 1, **dadurch gekennzeichnet, daß** das Einstellmittel (7) mit dem Betätigungsorgan (6) oder das Betätigungsorgan (6) des Einstellmittels (7) so am Motorrad angebracht ist, daß es durch eine Schwenkbewegung, insbesondere gegen die Kraft einer Totpunktfeder (5), von der Unterbringungsposition in die Verstellposition gebracht werden kann.

4. Motorrad nach Anspruch 3, **dadurch gekennzeichnet, daß** das Einstellmittel (7) mit dem Betätigungsorgan (6) oder das Betätigungsorgan (6) des Einstellmittels (7) über ein Gelenkgetriebe am Motorrad angebracht ist.

5. Motorrad nach einem der Ansprüche 1 bis 4, **dadurch gekennzeichnet, daß** das Federbein mit dem Einstellmittel (7) über eine Hydraulikleitung (8) verbunden ist.

6. Motorrad nach einem der Ansprüche 1 bis 4, **dadurch gekennzeichnet, daß** das Federbein mit dem Einstellmittel (7) über eine drehbare mechanische Verbindung verbunden ist.

7. Motorrad nach einem der Ansprüche 1 bis 6, **dadurch gekennzeichnet, daß** mit dem Einstellmittel (7) die Federvorspannung des Federbeins über die Verstellung einer Federbasis verändert wird.

8. Motorrad nach einem der Ansprüche 1 bis 6, **dadurch gekennzeichnet, daß** mit dem Einstellmittel (7) die Dämpfungseigenschaften des Federbeins über die Verstellung einer Zugstufe des Federbeins verändert werden.

9. Motorrad nach einem der Ansprüche 1 bis 8, **dadurch gekennzeichnet, daß** das Einstellmittel (7) mit dem Betätigungsorgan (6) oder das Betätigungsorgan (6) des Einstellmittels (7) so am Motorrad angebracht ist, daß es vom Fahrer während der Fahrt eingestellt werden kann.

10. Motorrad nach einem der Ansprüche 1 bis 8, **dadurch gekennzeichnet, daß** das Einstellmittel (7) mit dem Betätigungsorgan (6) oder das Betätigungsorgan (6) des Einstellmittels (7) unter der Sitzbank (1) des Motorrads angebracht ist.

11. Motorrad nach Anspruch 10, **dadurch gekennzeichnet, daß** die Sitzbank (1) klappbar am Motorrad angebracht ist und durch eine Gasdruckfeder (3) in geöffneter Stellung gehalten wird.

## Claims

1. A motorcycle with at least one spring leg comprising at least one manually actuated adjusting means for altering the spring prestress and/or the damping properties of the spring leg, wherein the adjusting means is mounted on the motorcycle separately from the spring leg, **characterised in that** at least one element (6) for actuating the adjusting means (7) is movable into two different positions relative to the motorcycle, that is an adjustment position for manually adjusting the adjusting means (7) and a stowage position in which the adjusting means (7) is so disposed that it does not project beyond an outer contour of the motorcycle in its neighbourhood.

2. A motorcycle in accordance with claim 1, **characterised in that** the adjusting means (7) and the actuating element (6) or the actuating element (6) of the adjusting means (7) is/are so mounted on the motorcycle that they can be moved in translation from the stowage position into the adjustment position.

3. A motorcycle in accordance with claim 1, **characterised in that** the adjusting means (7) and the actuating element (6) or the actuating element (6) of the adjusting means (7) is/are so attached to the motorcycle that they can be moved from the stowage position to the adjustment position by a pivoting motion, especially against the force of a dead-centre spring (5).

4. A motorcycle in accordance with claim 3, **characterised in that** the adjusting means (7) and the actuating element (6) or the actuating element (6) of the adjusting means (7) is/are mounted on the motorcycle via a linkage having only turning and sliding pairs.

5. A motorcycle in accordance with any of claims 1 to 4, **characterised in that** the spring leg is connected to the adjusting means (7) by a hydraulic line (8).

6. A motorcycle in accordance with any of claims 1 to 4, **characterised in that** the spring leg is connected to the adjusting means (7) by a rotatable mechanical connection.

7. A motorcycle in accordance with any of claims 1 to 6, **characterised in that** the spring prestress of the spring leg is altered by the adjusting means (7) by adjustment of a spring base.

8. A motorcycle in accordance with any of claims 1 to 6, **characterised in that** the damping properties of the spring leg are altered by the adjusting means (7) by shifting a tension stage of the spring leg.

9. A motorcycle in accordance with any of claims 1 to 8, **characterised in that** the adjusting means (7) and the actuating element (6) or the actuating element (6) of the adjusting means (7) is/are so mounted on the motorcycle that they can be adjusted by the driver while in motion.

10. A motorcycle in accordance with any of claims 1 to 8, **characterised in that** the adjusting means (7) and the actuating element (6) or the actuating element (6) on the adjusting means (7) are disposed under the motorcycle seat (1).

11. A motorcycle in accordance with claim 10, **characterised in that** the seat (1) is collapsibly mounted on the motorcycle and is held in the open position by a pneumatic spring (3).

## Revendications

1. Moto comportant au moins une jambe de suspension avec au moins un moyen de réglage à commande manuelle pour modifier la précontrainte du ressort et/ou les caractéristiques d'amortissement de la jambe de suspension, le moyen de réglage étant installé sur la moto séparément de la jambe de suspension,
**caractérisée en ce qu'**
au moins un organe d'actionnement (6) du moyen de réglage (7) peut être mis dans deux positions différentes par rapport à la moto, une position de réglage pour actionner manuellement le moyen de réglage (7) et une position de rangement dans laquelle le moyen de réglage (7) ne déborde pas par son contour du contour extérieur de la moto.

2. Moto selon la revendication 1,
**caractérisée en ce que**
le moyen de réglage (7) avec l'organe d'actionnement (6) ou encore l'organe d'actionnement (6) du moyen de réglage sont installés sur la moto de façon à permettre par un mouvement de translation de passer de la position de rangement à la position de réglage.

3. Moto selon la revendication 1,
**caractérisée en ce que**
le moyen de réglage (7) avec l'organe d'actionnement (6) du moyen de réglage (7) sont installés sur la moto de façon que par un mouvement de basculement notamment contre la force développée par un ressort à point mort (5) ils puissent être conduits de la position de rangement à la position de réglage.

4. Moto selon la revendication 3,
**caractérisée en ce que**
le moyen de réglage (7) avec l'organe d'actionnement (6) ou l'organe d'actionnement (6) du moyen de réglage (7) sont montés sur la moto par l'intermédiaire d'une transmission à articulation.

5. Moto selon l'une des revendications 1 à 4,
**caractérisée en ce que**
la jambe de suspension est reliée au moyen de réglage (7) par une conduite hydraulique (8).

6. Moto selon l'une des revendications 1 à 4,
**caractérisée en ce que**
la jambe de suspension est reliée au moyen de réglage (7) par une liaison mécanique tournante.

7. Moto selon l'une des revendications 1 à 6,
**caractérisée en ce que**
le moyen de réglage (7) permet de modifier la précontrainte du ressort de la jambe de suspension par le réglage d'une embase de ressort.

8. Moto selon l'une des revendications 1 à 6,
**caractérisée en ce que**
le moyen de réglage (7) permet de modifier les caractéristiques d'amortissement de la jambe de suspension par le réglage d'un étage de traction de la jambe de suspension.

9. Moto selon l'une des revendications 1 à 8,
**caractérisée en ce que**
le moyen de réglage (7) avec l'organe d'actionnement (6) ou l'organe d'actionnement (6) du moyen de réglage (7) sont installés sur la moto pour permettre au conducteur de régler pendant qu'il roule.

10. Moto selon l'une des revendications 1 à 8,
**caractérisée en ce que**
le moyen de réglage (7) avec son organe d'actionnement (6) ou l'organe d'actionnement (6) du moyen de réglage (7) sont logés sous la banquette (1) de la moto.

11. Moto selon la revendication 10,
**caractérisée en ce que**
la banquette (1) est montée basculante sur la moto et elle est tenue en position ouverte par un ressort à gaz (3).
